# EUROPEAN PATENT APPLICATION

(11) **EP 1 624 556 A1**
(43) Date of publication of application: **08.02.2006**
(21) Application number: 04715237.6
(22) Date of filing: 27.02.2004
(51) Int. Cl.: H02K 21/44

(54) **AN OUTER MAGNETIC CIRCUIT BIAS MAGNETIC BIAS RELUCTANCE MACHINE WITH PERMANENT MAGNETS**

(30) Priority: 09.04.2003 CN 03241247
(71) Applicant: Zhu, Zhengfeng, Fuzhou, Fujian 350011 (CN)
(72) Inventor: Zhu, Zhengfeng, Fuzhou, Fujian 350011 (CN)
(74) Representative: Altenburg, Udo
(86) International application number: PCT/CN2004/000151
(87) International publication number: WO 2004/091076

(57) **Abstract**

This invention relates to electromechanical field, and particularly relates to improvement of a reluctance machine, and provides an outer magnetic circuit bias magnet reluctance machine with permanent magnet. The reluctance machine is made up of a housing for supporting the machine, a stator, a rotor and permanent magnets. The stator at least consists of a pair of unit constructions. The permanent magnets are placed in magnetic circuit that is made up of the housing for supporting the machine made of magnetic material and the stator. And the stator suits with an inner rotor or an outer rotor, a cup rotor, a disk rotor or a toothed rack rotor. This invention can increase sufficiently utility factor off material, depress cost, and have more application, and the ratio off performance and price of the reluctance machine is obviously higher than that of a synchronous machine.

## Description

### Field of Invention

The present invention relates to the electromechanical field and particularly to the improvement of reluctance machine or reaction machine, and to provide an outer magnetic circuit bias magnetic type reluctance machine with permanent magnet.

### Background art of Invention

Reluctance machine is also referred to as reaction type machine it is usually considered to be highly pulsating, less effective and complicated in driving, therefore is not used as broadly as DC motor, asynchronous motor and synchronous motor, and usually it is used as stepping motor and switching reluctance motor. Reluctance motor is driven by means of DC pulsating current. For example, in a 3-phase reluctance motor, under the condition that chopper type driving circuit is in common use nowadays, at low speed, the driving current of motor corresponds rectangular waveform, this rectangular waveform includes DC + fundamental wave +3^{rd} harmonics +5"' harmonics, etc. Among them, DC component ensures that the total magnetic flux is always unidirectional magnetic flux, which is necessary for the normal operation of the reluctance motor; the fundamental wave component corresponds to that portion of work conducting energy, which produces rotating magnetic field in AC motor; said 3^{rd} harmonics, 5^{th} higher harmonics are harmful components which cause the pulsating and heating in the motor.

### Summary of Invention

The object of present invention is to use bias magnetic flux provided by bias magnetic device which is independently arranged between stator and supporting housing to replace the unidirectional magnetic flux produce by DC component of the original driving winding of reluctance motor, and to design a kind of outer magnetic circuit bias magnetic type reluctance motor so that DC component and fundamental wave component are retained, harmonics are eliminated to overcome the insufficiency of the reluctance motor.

To achieve the above object, the technical scheme is as follows: a kind of outer magnetic circuit bias magnetic type reluctance motor with permanent magnets is composed of a supporting housing, stator, rotor and permanent magnet body, the stator is formed by at least a pair of independent structures, and a permanent magnet body is provided between the magnetic path consisting of the supporting made of magnetically conductive material and stator.

In said outer magnetic circuit bias magnetic type reluctance motor with permanent magnets, at least me pair of stators get together in circumferential direction to from inner cylinder or outer cylinder air gap space in order to match with cylinder shaped inner rotor or outer rotor.

In the said outer magnetic circuit hias magnetic type reluctance motor with permanent magnets, its paired inner stator and outer stator match in radial direction to form double air gap space and match with cup shaped rotor.

In the said outer magnetic circuit bias magnetic type reluctance motor with permanent magnets, its paired stators have disk-shaped end faces, two stators in pairs match in axial direction to form double air gap space, matching with disk-shaped rotor.

In the said outer magnetic circuit bias magnetic type reluctance motor with permanent magnets its stators in pain have planar shape. Two or four stators match with each other to form double side (face) or four side (face) air gap space to match with double-side rack shaped glider or four side rack shaped glider.

With the permanent magnet bias magnetic of the present invention copper wire material can be saved by one half, and space for receiving wires can be reduced, external connection can be simplified, the size of motor can be reduced and the losses in operation can be lowered.

The equipment structure of the present invention in which, by using the supporting housing to form DC outer magnetic path in combination with original AC magnetic yoke of stator icon core, has the advantages of fully utilizing materials, lowering manufacturing cost. The driving performance of the outer magnetic circuit bias magnetic reluctance motor is similar to synchronous motor, it can use the same driving circuit, the same driving mode and has broader field of applications, the cost-effectiveness ratio is significantly higer then the synchronous motor.

### Brief description of accompanying drawings

The present invention is further described by the following examples in conjunction with the accompanying drawings:
Fig.1(a) is a schematic view, showing the structure of magnetic circuit of the stator of permanent magnet type bias magnetic motor.
Fig 1(b) is the wiring diagram for winding in fig 1(a);
Fig.2(a) is a schematic view, showing the structure of magnetic circuit of the stator of permanent magnet type bias magnetic motor with cup-shaped rotor of double air gaps;
Fig.2(b) is the wiring diagram for winding in Fig. 2(a);
Fig 3(a) is a schematic view, showing the structure of magnetic circuit of the stator of linear motor with double air gaps;
Fig. 3(b) is the wiring diagram for winding in Fig. 3(a);
Fig 4 is a schematic view, showing the sliucture of magnetic circuit if the stator of disc-shaped motor with double air gaps;
Fig 5 is a schematic view, showing an another structure of the magnetic circuit of the stator of permanent magnet motor with cup-shaped rotor of double air gaps.

### Detailed Description of the Preferred Embodiments

By making use of bias magnetic principle, the winding of original reluctance motor is divided into two, that is, the bias magnetic winding and driving winding. In order to avoid the mutual influence and interference between the bias magnetic winding and driving winding. A proper connection mode must be designed. One connection mode is to connect bias magnetic windings of all phases in series. Considering the fact that the pulling force of the magnetic field of the reluctance motor has nothing to do with the direction of current, if the respective phase sequences are arranged as the even number phase motor, in the wire slots with magnetic poles of the same direction, the effect of the bias magnetic windings of the adjacent phases are cancelled out mutually, the magnetic windings of respective original phases can be replaced by a pair of large pole distance windings the coil turn of which is equal to original concentrated winding. Then, This is excited field bias magnetic type. If permanent magnet is used to replace bias magnetic winding, then it is permanent magnet bias magnetic type. The feature of the present invention is the use of bias magnetic flux provided by bias: magnetic equipment (device) independently arranged between stator, rotor and the supporting housing to replace unidirectional magnetic flux produced by DC component of driving winding, thereby to design a kind of outer magnetic circuit bias magnetic type reluctance motor.

Thereby, the amperes-turn number of the driving winding is reduced by 1/2, and power factor is raised, resulting in the saving of the manufacturing cost of driving conduit by several teroes. And the damping characteristic is improved. This combined structure in which DC outer magnetic circuit formed by the supporting housing is combined with original AC magnetic yoke of stator iron core, can fully make use of materials to lower the manufacturing cost. The driving performance of the outer magnetic circuit bias magnetic reluctant motor is similar to that of synchronous motor, it can use the same driving circuit and the same driving mode, and has broader uses. The cost-effectiveness is obviously higher than synchronous motor.

### Embodiment I

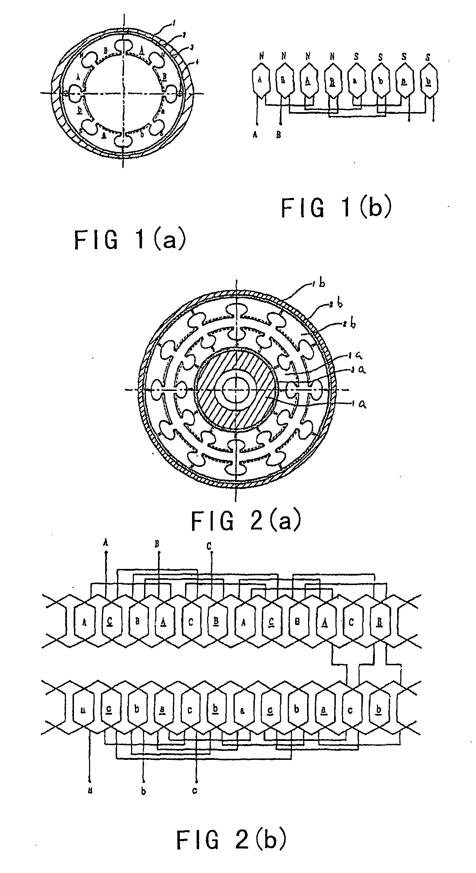

Refer to the scheme shown in Fig 1(a). It consists of the supporting housing 1. stator 2, rotor, permanent magnet body 3 and magnetic separation positioning pin 4. The stator is divided into 2 halves, forming a pair of independent structure. A thin wall ring-shaped permanent magnet body 3 is arranged between magnetic circuit consisting of the supporting housing 1 made of magnetic conductive material and the stator 2, the magnetic separation positioning pin 4 assures the mutual position of the two halves of the stator. The feature of this embodiment is that the stator 2 is divided into two halves. The permanent magnetic material 3 is arranged between stator 2 and the supporting housing 1, the permanent magnetic path is formed by making use of thickened housing 1 (in order to fully utilize material, this embodiment uses elliptic unequal cross section housing, this permanent magnetic path forms DC magnetic path which connects two halves of the stator. The permanent ring 3 forms a separates on interface for separating AC and DC magnetic path. Original stator magnetic yoke now become AC magnetic yoke.

This embodiment utilizes bias permanent magnet to form upper and lower N.S permanent magnet poles, the distribution of magnetic flux between the magnetic poles near the N. S interface is different from the distribution of magnetic flux between other magnetic poles.

Two-phase, four-pole design is used (the teeth number difference of stator and rotor is still 2 teeth), the asymmetric influence can be reduced to minimum. Fig.2(b) is the wiring diagram for this two-phase motor.

After the permanent magnet body has produced bias magnetic unidirectional magnetic flux, only alternation driving magnetic flux passes through magnetic yoke portion of the stator 2, therefore, the size can be reduced by 1/2. With the same reason, in the wire slot, the bias magnetic winding is not necessary to be placed, its size can also be reduced by 1/2. Although the housing is thickened and the permanent magnet body is placed in, based on the fact that the same outer diameter of rotor is guaranteed, the outer diameter of motor remains uncharged. Because the space for receiving the permanent magnet body becomes larger, the inexpensive material such as ferrite can be used.

This scheme can be used to replace 4-phase 2-pole motor in the commonly used switching reluctance motor. The structure of the embodiment can also be used in outer sutor motor, and the similar motors with different phase number and different pole number.

### Embodiment II

Based on the embodiment I, the two segments of stator are deformed into two inner and outer stators as shown in Fig 2(a). The features of this embodiment are: the stator is divided into two independent structures of inner stator 2a and outw stator 2b, forming double air gap space. And (can be matched with cup shaped rotor). The permanent magnet is divided into inner permanent magnet 3a and outer permanent magnet 3b, which are, disposed respectively between stator 2a, 2b and the inner supporting housing 1a and outer supporting housing 1b and the supporting housing 1a, 1b are used as permanent magnetic path. Taking the manufacturing process into account, the supporting housing made of magnetic conductive material is divided into inner supporting housing 1a and outer supporting housing 1b. In the Fig 2(a), the poles of outer stator 2b and inner stator 2a can be exchanged. The thin wall ring shaped inner permanent magnet 3a and outer permanent 3 are respectively arranged in the magnetie path between the supporting housing 1a, 1b and stator 2a, 2a. When the size of motor is selectively small, the outer permanent magnet body 3b can be incorporated in the inner permanent magnet 3a to simplify the structure.

In Fig 2(b) is shown a 3 phase-4 pole motor, which uses short pole distance (or full pole distance) distributed winding connection mode. Using such simple distributed winding, coil turn number per each wire slot can be reduced by one half as compared with concentrated winding. With this mode, the size of wire slot can be reduced to 1/4 as compared with conventional reluctance motor. The size of magnetic yoke can be also properly reduced, therefore. The moment output per unit volume is 2-four times of conventional multi-pole asynchronous motor.

The critical or vital technology of this embodiment is that the tooth difference number of rotor is pole pair number P of each phase (different from conventional reluctance motor in which the tooth difference number is 2 P), corresponding to the above-mentioned 2 phase-four pole motor, and the tooth number of rotor inner and outer circle is the same, with the position being aligned, the technological process is further simplified as compared with combination type motor. This embodiment is suitable to be used in disk-shaped motor with midium low speed large moment of force. The moment of force is double as compared with combination type motor of the same volume.

### Embodiment III

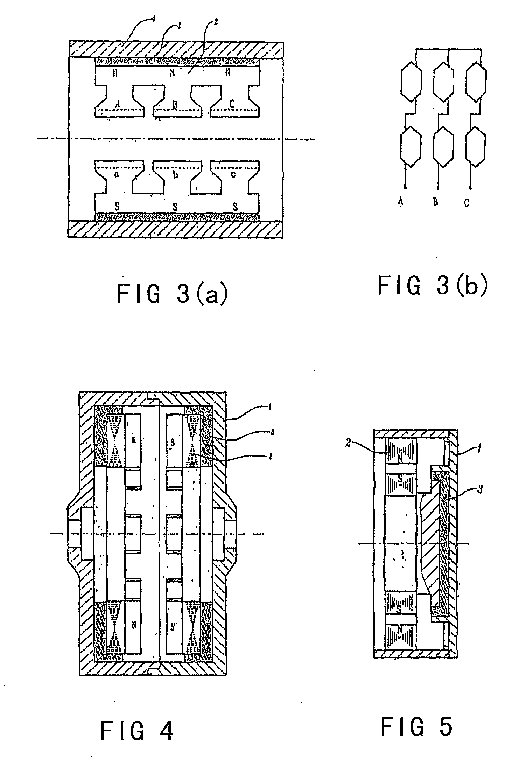

Fig 3(a) is a schematic view of the the stator magnetic circuit of 3-phase linear motor. In this embodiment, the main feature is the same as the above-mentioned embodiments, the difference is that the round air gap is developed into straight air gap, only the horizontal cross section is shown in Figure, in which the supporting housing 1, stator 2, permanent magnet body 3 already forms a complete structure, and can directly drive double-face (side) rack shaped slider, based on this, if a same structure is added to the vertical cross section to drive four-face (side) rack shaped slider, the push force can be doubled. The teeth space or pitch between stator and slider is different, within the length range of the central distance of two poles of the stator, the teeth space difference is 1/3. For the motors of other phases, this may be deduced by analogy. If the permanent magnet body is placed by the bias magnetic winding, it is excited field magnetic bias.

Fig (3) b shows a motor with 2 poles per phase, a pair of upper and lower magnetic pole form actuating phase. Star connection is employed between 3 phase windings, with the minder point being free end. Motor with four poles may be deeded by analogy.

The technological feature is that paired stators form a planar shape, two or four of them match each with other to form double-side (face) or 4 side (face) air gap space to match with double side (face) or 4 side (face) rack shaped glider.

### Embodiment IV

Fig 4 shows the structure of permanent magnets circuit of stator of disk-shaped motor. The feature of this embodiment lies in that paired stators 2 form disk shaped end face. The two stators matched with each other to form double air gap space, and to match with disk-shaped rotor. In this embodiment, if the difficulty in manufacture of rotor is not considered, the permanent magnet body 3 may be arranged between rotors. As compared with Embodiment III, only difference is that the radial air gap is changed to axial air gap, the rest remains unchanged, for the convenience of assembly and disassembly, the outer housing 1 is divided into two halves, in order to further increase the supporting strength of the stator, several non magnetic conductive stainless screws can be added between the stator and the outer housing 1 for reinforcement.

If the permanent magnet bady 3 is not used, bias magnetic windings can be concentrated to become a large wire coil and the wrie is wound in circumference direction and the winding is placed between double stator magnetic path to produce axial magnetic flux and to form bias magnetic circuit by stator, rotor and outer housing, thereby excited field type magnetic bias is formed. Of course the excited field type and permanent magnetic circuit can be used simultaneously.

### Embodiment V

An another magnetic circuit of the stator of the permanent magnet bias type reluctance motor with double air gap cup shaped rotor, as compared with the structure shown in Fig2, the difference lies in that the position of permanent magnet body 3 is removed from middle of magnetic path formed by the supporting housing 1. This structure sets less moulding demands on the permanent magnet 3, it can use sintered type permanent magnetic materials.

## Claims

1. A kind of surer magnetic circuit bias magnetic type reluctance motor with permanent magnets, it is composed of supporting housing, stator, sotor and permanent magnet, **characterized in that** stator is at least consisted of a pair of independent structure, a permanent magnet body is arranged between the magnetic path consisting of the supporting housing made of magnetic conductive material and the stator.

2. The outer magnetic circuit bias magnetic type reluctance motor with permanent magnets according to claim 1, **characterized in that** at least a pain of stators get together in circum frontal direction to form inner cylinder or outer cylinder ait gap spece and to match with cylinder shaped inner rotor or outer rotor.

3. The outer magnetic circuit bias magnetic type reluctance motor with permanent magnets a cording to claim 1, **characterized in that** the inner and onter stator in pair match in the radial direction to form double air gap space to match with cup-shaped rotor.

4. The outer magnetic circuit bias magnetic type rebalance motor with permanent magnets according to claim 1, **characterized in that** the paired stators have the disk-shaped end face, the two stators match in axial direction to form double air gap space to match disk-shaped rotor.

5. The outer magnetic circuit bias magnetic type reluctance motor with permanent magnets according to clain 1, **characterized in that** the paired stators have the planer shape, two or four stators match to former two face or four face air gap space to match with two face rack shaped slider or four face rack shaped slider.

## Amended claims

### Amended claims under Art. 19.1 PCT

1. A kind of outer magnetic circuit bias magnetic type reluctance motor with permanent magnets, **characterized in that** it is consisting of supporting housing (1), stator (2), rotor and permanent magnet body (3), **characterized in that** the stator is formed by at least one pair of independent structures, a permanent magnets (3) is arranged between the supporting housing (1) made of magnetic conductive material and the stator (2) or in the middle of magnetic path formed by the supporting housing.

2. The outer magnetic bias magnetic type reluctance motor with permanent magnets, **characterized in that** at least a pair of stators (2) get together in circumferential direction to form inner cylinder or outer cylinder air gap space and to match with cylinder shaped inner rotor or outer rotor.

3. The outer magnetic circuit bias magnetic type reluctance motor with permanent magnets according to claim 1, **characterized in that** the inner and outer stator (2) in pair match in the radial direction to form double air gap space to match with cup-shaped rotor.

4. The outer magnetic circuit bias magnetic type rebalance motor with permanent magnets according to claim 1, **characterized in that** the paired stators (2) have the disk-shaped end face, the two stators match in axial direction to form double air gap space to match disk-shaped rotor.

5. The outer magnetic circuit bias magnetic type reluctance motor with permanent magnets according to claim 1, **characterized in that** the paired stators (2) have the planer shape, two or four stators of them match to form double face or four face air gap space to match with double face rack shaped slider or four face rack shaped slider.
